Europäisches Patentamt

European Patent Office

Office européen des brevets

(19)

(11) **EP 0 708 700 B1**

(12) **FASCICULE DE BREVET EUROPEEN**

(45) Date de publication et mention
de la délivrance du brevet:
**23.04.1997 Bulletin 1997/17**

(21) Numéro de dépôt: **94922887.8**

(22) Date de dépôt: **08.07.1994**

(51) Int. Cl.⁶: **B26F 1/38**, A41H 3/00,
G01D 9/40

(86) Numéro de dépôt international:
**PCT/FR94/00849**

(87) Numéro de publication internationale:
**WO 95/02489 (26.01.1995 Gazette 1995/05)**

(54) **PROCEDE POUR L'EXECUTION DE TRACES OU DECOUPES SUIVANT DES TRAJECTOIRES PREDETERMINEES SUR UN MATERIAU**

VERFAHREN ZUM SCHNEIDEN EINES MATERIALS NACH VORBESTIMMTEN SCHNITTBAHNEN

METHOD FOR MARKING OR CUTTING A MATERIAL ALONG PREDETERMINED PATHS

(84) Etats contractants désignés:
**DE ES GB IT**

(30) Priorité: **15.07.1993 FR 9308698**

(43) Date de publication de la demande:
**01.05.1996 Bulletin 1996/18**

(73) Titulaire: **LECTRA SYSTEMES S.A.**
**F-33610 Cestas Bourg (FR)**

(72) Inventeur: **BOUSQUET, Philippe**
**F-33700 Mérignac (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**EP-A- 0 229 935          EP-A- 0 472 190**
**FR-A- 2 640 202**

Printed by Rank Xerox (UK) Business Services
2.14.2/3.4

## Description

La présente invention concerne un procédé pour l'exécution de tracés ou découpes suivant des trajectoires prédéterminées sur un matériau.

Le domaine d'application de l'invention est particulièrement celui des traceurs et des machines de gravage ou de découpe avec lesquelles des tracés ou des découpes correspondant à des dessins prédéterminés sont effectués sur un matériau par déplacement relatif entre celui-ci et un outil, tel qu'un outil d'écriture, de gravage ou de découpe.

L'invention se rapporte plus précisément aux machines qui comportent une zone ou table de travail sur laquelle les tracés, gravures ou découpes sont effectués par déplacement de l'outil par rapport au matériau suivant deux directions dans la zone de travail, des portions successives du matériau étant amenées dans la zone de travail sous l'action d'une commande séparée de celle de l'outil.

Il en est ainsi notamment avec des machines de découpe à commande numérique utilisées pour la découpe de tissus, feutres, cuirs ou autres matériaux souples en feuille dans l'industrie de la confection, de l'ameublement... Dans ces machines, la découpe est effectuée au moyen par exemple d'une lame vibrante, une molette, un faisceau laser, ou un jet d'eau sous pression porté par une tête de coupe qui est déplacée par rapport au matériau dans la zone de travail suivant deux directions différentes. Le matériau peut être disposé en nappes superposées formant un matelas de manière à réaliser plusieurs découpes simultanées.

Les pièces sont découpées suivant un placement prédéterminé qui est défini de manière à minimiser les pertes de matière. Afin de limiter l'encombrement de ces machines, la zone de travail dans laquelle la découpe est effectuée peut avoir une longueur inférieure à celle d'un placement complet tout en ayant une largeur égale à celle du matériau.

Pour découper l'ensemble des pièces d'un placement, il est donc nécessaire de commander des avances intermittentes du matériau en feuille afin d'amener de nouvelles portions de celui-ci dans la zone de travail, l'avance du matériau étant commandée séparément du déplacement de la tête de coupe.

Il en est de même avec les traceurs à commande numérique qui utilisent un matériau d'impression continu (papier ou autre matériau en feuille) et qui comportent une table XY sur laquelle le tracé est effectué par déplacement d'un outil d'écriture suivant deux directions différentes, souvent orthogonales, la table ayant une longueur, dans le sens longitudinal du matériau d'impression continu, qui est inférieure à celle occupée par un dessin ou un ensemble de dessins à reproduire.

Dans ces machines connues, l'avance du matériau est commandée après que l'ensemble des tracés ou découpes à effectuer sur la portion du matériau située dans la zone de travail a été réalisé, l'outil étant en position de repos pendant l'avance du matériau. Cette avance est commandée sur une longueur correspondant sensiblement à celle de la zone de travail pour amener sur celle-ci une nouvelle portion du matériau,

Un inconvénient de ces machines de l'art antérieur est la perte de productivité due aux interruptions des opérations de tracés ou découpes pendant les temps d'avance du matériau.

Pour réduire cette perte de productivité, une solution consiste à réaliser des avances de matériau aussi rapides que possible. Toutefois, il en résulte des contraintes sur le matériau qui, avec des matériaux minces et souples, peuvent se traduire par des glissements ou par la formation de plis qui altèrent la précision de tracé ou de découpe. En outre, chaque avance étant réalisée sur la longueur de la zone de travail, il est nécessaire de prévoir une zone de déchargement au moins de même longueur, ce qui pose des problèmes de coûts, d'encombrement et d'accessibilité.

Il a bien été suggéré, dans son principe, d'éviter l'inconvénient de perte de productivité en n'interrompant pas le travail de l'outil pendant l'avance du matériau. On pourra se référer à cet effet au document FR-A-2 640 202.

Toutefois, le domaine de travail de l'outil est alors limité aux nouvelles parties du matériau qui sont progressivement amenées dans la zone de travail pendant l'avance, et la composante de vitesse de l'outil, dans le sens longitudinal en direction opposée à l'avance, ne peut être supérieure à la vitesse d'avance. Or, comme indiqué ci-dessus, celle-ci ne peut être très élevée. De plus, pour tous les tracés et découpes qui n'ont pu être entièrement réalisés du fait qu'ils ne se trouvaient pas intégralement dans la zone de travail, il est nécessaire de procéder à des reprises. Une très grande précision est alors nécessaire pour assurer que les reprises soient faites sans le moindre décalage lorsqu'une haute qualité de tracé est souhaitée, ou pour garantir la continuité de la découpe. Ceci n'est pas sans poser de problèmes pratiques, notamment avec des matériaux non rigides.

Aussi, la présente invention a-t-elle pour but de fournir un procédé grâce auquel une perte de productivité par interruption du travail de l'outil pendant les phases d'avance du matériau est évitée, mais sans les inconvénients précités.

Ce but est atteint du fait que, conformément à l'invention, chaque avance du matériau est effectuée sur une distance inférieure à la longueur de la zone de travail, mesurée dans la direction d'avance du matériau, et l'outil est commandé, pendant une avance du matériau, pour décrire au moins en partie une ou plusieurs trajectoires sur une portion du matériau déjà présente dans la zone de travail avant cette avance et non évacuée de la zone de travail pendant cette avance.

Grâce à cette disposition, aucune restriction n'est imposée à l'outil pendant l'avance du matériau. La commande de l'outil peut donc être indifférenciée, selon que le matériau est immobile ou est avancé, à la seule condition, bien sûr, que, pendant l'avance, la coordonnée de l'outil par rapport au matériau, dans la direction de l'avance, soit en permanence corrigée par calcul pour tenir compte du déplacement du matériau. Ainsi, l'avance de ce dernier est réalisée effectivement et complètement en temps masqué.

Selon un mode de mise en oeuvre du procédé conforme à l'invention, on définit une fenêtre de travail ayant une longueur prédéterminée, dans la direction d'avance du matériau, inférieure à la longueur de la zone de travail et, après avoir décrit au moins une partie des trajectoires contenues dans la fenêtre, on décale la fenêtre de travail vers l'amont de la zone de travail dans une position qui couvre au moins chaque trajectoire ou partie de trajectoire non encore décrite située le plus en aval et on commande une avance du matériau en déplaçant simultanément la fenêtre de travail.

Ainsi, ce mode de mise en oeuvre revient à définir une fenêtre de travail flottante de longueur inférieure à celle de la zone de travail et à l'intérieur de laquelle le travail de l'outil est confiné.

On pourra par exemple choisir une fenêtre de travail ayant une longueur égale à la moitié de celle de la zone de travail. Dans ce cas, la fenêtre de travail occupant la moitié aval de la zone de travail, l'ensemble des trajectoires situées dans la fenêtre est décrit. Ensuite, la fenêtre de travail est décalée vers l'amont, par exemple sur toute sa longueur, pour occuper la moitié amont de la zone de travail, et une avance du matériau est commandée sur une longeur égale à celle de la fenêtre. L'outil est commandé dès le début de l'avance pour commencer à décrire les trajectoires situées dans la fenêtre de travail, celle-ci se déplaçant en même temps que le matériau pour revenir occuper la moitié aval de la zone de travail, le travail de l'outil se poursuivant, après la fin de l'avance pour décrire l'ensemble des trajectoires situées dans la fenêtre.

Il est également possible, pour limiter le nombre de reprises de trajectoires, de commander le décalage amont de la fenêtre de travail et l'avance simultanée du matériau et de la fenêtre de travail sur une longueur inférieure à celle de la fenêtre. De la sorte deux positions successives de la fenêtre se recouvrent. Ceci permet, lorsque la fenêtre se trouve dans sa première position, de ne pas commencer à décrire des portions de trajectoires situées dans la partie amont de la fenêtre, dans la zone de recouvrement et d'attendre que la fenêtre soit dans sa deuxième position pour décrire, de façon ininterrompue, ces trajectoires et éviter ainsi des reprises.

Selon un autre mode de mise en oeuvre du procédé conforme à l'invention, chaque avance du matériau est déterminée pour permettre de décrire chaque trajectoire de façon ininterrompue entre le début d'une avance et le début de l'avance suivante. On suppose, bien entendu, que chaque trajectoire s'inscrit entièrement dans la zone de travail ; les quelques trajectoires pouvant éventuellement échapper à cette condition préalable seront partagées en plusieurs trajectoires qui s'inscrivent chacune dans la zone de travail.

Chaque avance du matériau est commandée sur une longueur inférieure ou égale à une première valeur qui est égale à la distance séparant l'extrémité aval de la zone de travail et l'extrémité aval la plus proche de l'emplacement d'une trajectoire non encore décrite.

De préférence alors, une avance du matériau est effectuée sur une longueur supérieure ou égale à une deuxième valeur qui est égale à la plus grande des distances séparant l'extrémité amont de la zone de travail de l'extrémité amont des emplacements de trajectoires non encore comprises entièrement dans la zone de travail, distance pour laquelle ladite deuxième valeur reste inférieure ou égale à ladite première valeur. Ceci permet de faire en sorte que l'emplacement d'au moins une nouvelle trajectoire se trouve complètement dans la zone de travail.

L'invention sera mieux comprise à la lecture de la description faite ci-après, à titre indicatif mais non limitatif, en référence aux dessins annexés sur lesquels :

- la figure 1 est une vue très schématique d'une machine de découpe dans laquelle le procédé selon l'invention peut être mis en oeuvre,
- les figures 2A à 2D sont des vues des positions occupées dans la zone de travail de la machine de la figure 1 par une fenêtre de travail et par un matériau dans lequel des découpes sont à effectuer conformément à un placement prédéterminé, selon un premier mode de mise en oeuvre du procédé conforme à l'invention,
- la figure 3 est un organigramme illustrant le déroulement de ce premier mode de mise en oeuvre du procédé conforme à l'invention,
- les figures 4A à 4C illustrent une variante du premier mode de mise en oeuvre du procédé conforme à l'invention,
- les figures 5A à 5D sont des vues de positions occupées dans la zone de travail de la machine de la figure 1 par un matériau dans lequel des découpes sont à effectuer conformément à un placement prédéterminé, selon un deuxième mode de mise en oeuvre du procédé conforme à l'invention, et
- la figure 6 est un organigramme illustrant le déroulement de ce deuxième mode de mise en oeuvre du procédé conforme à l'invention.

Deux modes de mise en oeuvre de l'invention sont maintenant décrits. Le premier mode de mise en oeuvre vise de préférence des applications dans lesquelles les trajectoires à décrire peuvent, sans problèmes particuliers, faire l'objet de reprises, par exemple après une avance du matériau, tandis que le deuxième mode correspond plutôt à des applications où des reprises de trajectoires sont de préférence à éviter. Dans le premier cas, il s'agira de préférence d'opérations de tracé, lorsqu'un léger décalage du trait en cas de reprise ne présente pas d'inconvénient ; dans le deuxième cas, il s'agira de préférence d'opérations de découpe ou de gravage, ou d'opérations de tracé lorsqu'une parfaite continuité du trait est souhaitée.

Dans tous les cas, le domaine d'application est celui de machines à commande numérique dans lesquelles l'outil est piloté suivant deux axes X, Y au-dessus d'une zone de travail d'un support permettant ou facilitant l'avance du matériau sur lequel l'outil doit opérer. Cette avance est réalisée suivant une direction parallèle au plan défini par les axes X, Y, non nécessairement parallèle à l'un de ces axes, la commande de l'avance du matériau étant séparée de celle de l'outil.

Comme déjà indiqué, les opérations réalisées sur le matériau peuvent être de différentes natures : tracé, découpe partielle ou totale, marquage, gravage, et utiliser différents types d'outils. Dans la plupart des applications, le matériau est un matériau en feuille, en bande ou en plaque, souple ou rigide.

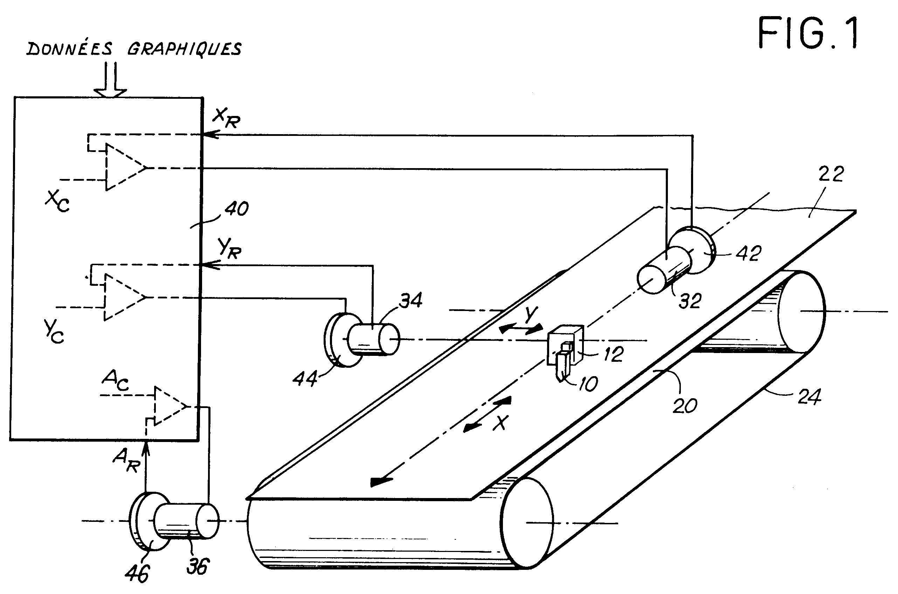

Une machine permettant un tracé automatique de contours sur un matériau ou une découpe automatique de pièces dans un matériau a une constitution générale telle que très schématiquement illustrée par la figure 1. Une telle machine à commande numérique permettant d'effectuer un tracé sur un matériau en feuille ou une découpe dans un tel matériau est bien connue, en particulier dans le domaine de la confection.

Le tracé ou la découpe est effectué par exemple au moyen d'un outil approprié 10, par exemple un feutre ou un générateur de faisceau laser porté par une tête 12. Celle-ci est déplacée suivant deux axes orthogonaux X, Y par rapport à une zone de travail horizontale 20 occupée par un matériau en feuille 22, par exemple du tissu.

La zone de travail 20 est constituée par la partie supérieure horizontale d'un convoyeur sans fin 24 sur lequel le matériau 22 est amené depuis un poste d'alimentation amont et duquel les pièces découpées sont évacuées vers un poste de déchargement aval. L'avance intermittente du matériau dans la zone de travail, au fur et à mesure de la découpe des pièces dans celui-ci, est effectuée par déplacement du convoyeur sans fin 24. L'entraînement du matériau par le convoyeur est assuré simplement sous l'effet de la gravité. Des moyens supplémentaires de solidarisation entre le matériau et le convoyeur peuvent être envisagés, par exemple des galets presseurs agissant sur les bords longitudinaux du matériau.

Les déplacements de la tête 12 en X et Y (X étant ici la direction longitudinale parallèle à la direction d'avance) sont commandés par des moteurs respectifs 32, 34 à partir de signaux fournis par une unité de commande 40. L'unité 40 peut consister en un calculateur. Les déplacements de la tête 12 sont commandés par le calculateur 40 pour permettre à l'outil 10 de décrire des trajectoires prédéterminées, par exemple, dans le domaine de la confection, des trajectoires correspondant à un placement préétabli dans un lé de tissu. A cet effet, le calculateur 40 reçoit d'une mémoire ou d'un ordinateur hôte des données graphiques représentatives des trajectoires à décrire. La tête 12 est asservie en position sur chacun des axes X et Y. Une information de position réelle $X_R$ est donnée par un capteur, tel qu'un codeur angulaire 42 monté sur l'axe du moteur 32 et est comparée par le calculateur 40 avec une valeur de consigne $X_C$ pour élaborer un signal d'erreur et commander le moteur 32. De la même manière, le moteur 34 est commandé en fonction d'un signal d'erreur obtenu par comparaison entre une valeur de consigne $Y_C$ et une information de position réelle $Y_R$ de la tête 12 sur l'axe Y ; l'information $Y_R$ est donnée par un codeur angulaire 44 monté sur l'axe du moteur 34. En outre, pour chaque trajectoire, le calculateur 40 détermine la vitesse et l'accélération de la tête 12. Le calculateur 40 commande également un moteur 36, qui entraîne le convoyeur en déplacement sur lui-même pour faire avancer le matériau 22 sur la zone de travail 20 de façon intermittente. Un codeur angulaire 46 monté sur l'axe du moteur 36 fournit une information de position réelle $A_R$ du convoyeur qui est comparée avec une valeur de consigne $A_C$ par le calculateur 40 pour commander le moteur 36 afin de faire avancer le convoyeur sur une distance prédéterminée.

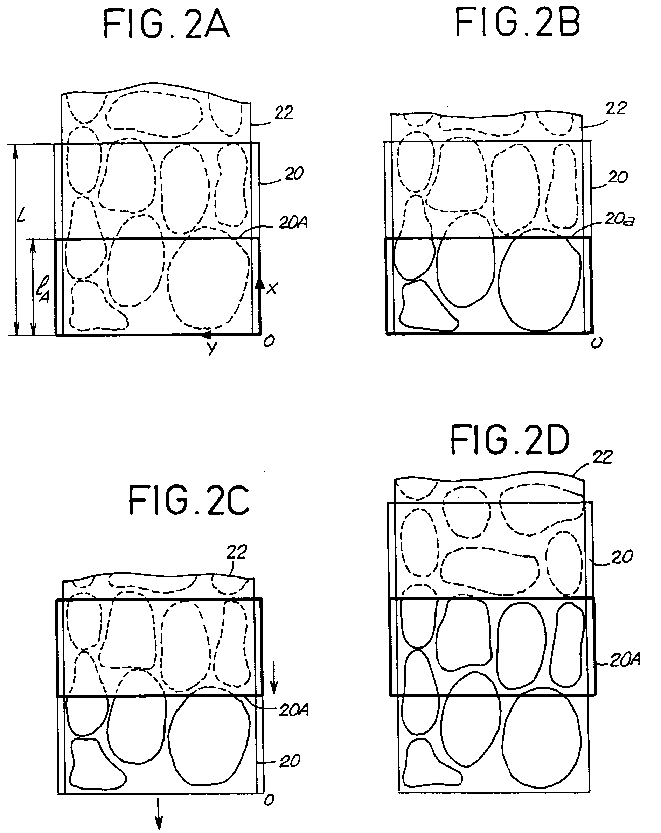

On se référera maintenant aux figures 2A à 2D dans le cadre de la description générale d'un premier mode de mise en oeuvre du procédé selon l'invention pour une application au tracé de contours de pièces sur le matériau 22.

La figure 2A montre, en traits interrompus, les contours des pièces à tracer sur le matériau 22 correspondant à un placement préétabli. La zone de travail 20 a une longueur généralement bien inférieure à celle du placement (qui peut atteindre plusieurs mètres, voire dizaines de mètres). L'encombrement de la machine est donc réduit, mais la découpe complète du placement demande l'avance intermittente du matériau 22.

Le travail de l'outil s'effectue à l'intérieur d'une fenêtre de travail 20A dont la longueur $l_A$, dans la direction d'avance du matériau 22 est inférieure à la longueur L de la zone de travail 20. Dans l'exemple illustré, la longueur $l_A$ est égale à L/2.

Dans un premier temps, le matériau 22 est immobile, avec son extrémité avant située au niveau de l'extrémité aval de la zone de travail 20 et la fenêtre 20A occupe la moitié aval de la zone de travail 20. Le déplacement de l'outil est commandé par le calculateur pour effectuer les tracés des pièces situées dans la fenêtre 20A (figure 2B), c'est-à-dire en faisant décrire à l'outil l'ensemble des trajectoires situées dans cette fenêtre.

Cette première phase effectuée, la fenêtre 20A est décalée vers l'amont pour occuper la moitié amont de la zone de travail 20 (l'origine de la fenêtre est positionnée à l'abscisse L/2), l'outil est amené dans la fenêtre, et le démarrage d'une avance du matériau 22 est commandé (figure 2C). Pendant cette avance, l'outil est commandé par le calculateur pour tracer les trajectoires situées dans la fenêtre 20A, celle-ci étant déplacée vers l'aval en synchronisme avec le matériau. Pendant l'avance, la position de l'outil est asservie à des valeurs de consigne $X_C$ + DAV, $Y_C$, où DAV est la longueur restant à parcourir par le matériau jusqu'à la fin de l'avance. La valeur DAV est déduite des informations issues du capteur 46 associé au moteur d'entraînement du convoyeur pour garantir l'asservissement de la position de l'outil à la position de la fenêtre de travail. Ainsi, pendant l'avance, l'opération de tracé se déroule sans interruption, la seule modification, par rapport au fonctionnement avec le convoyeur à l'arrêt, consistant à ajuster en permanence la valeur de consigne d'abscisse de l'outil.

A la fin de l'avance, la découpe est poursuivie et terminée dans la fenêtre 20A revenue dans la moitié aval de la zone de travail 20 (figure 2D).

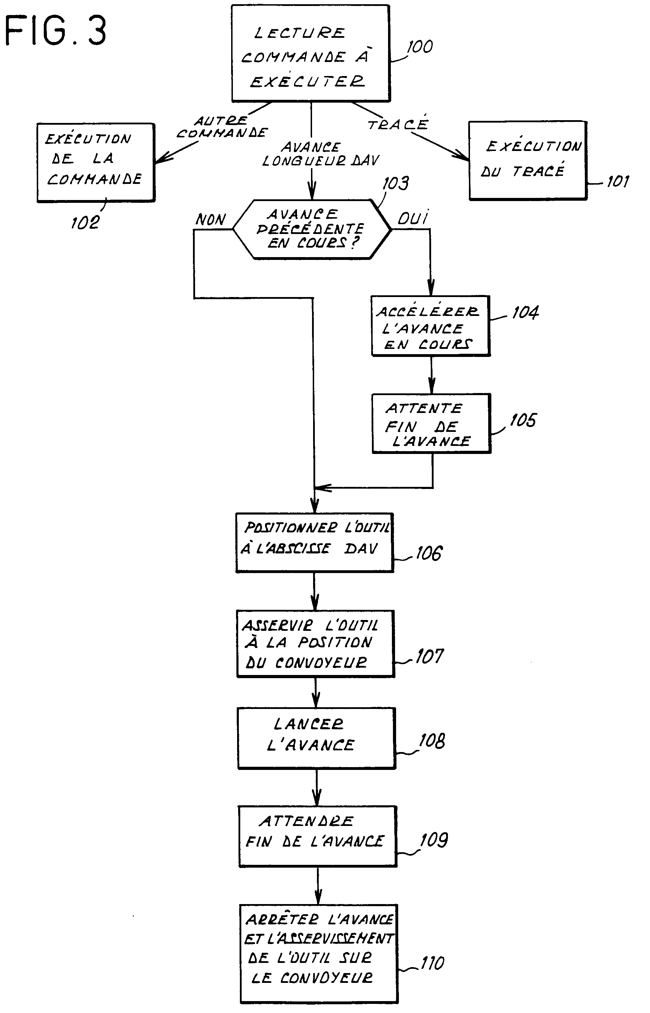

Ce processus se répète jusqu'au tracé du placement complet. Une séquence élémentaire du processus est décrite par l'algorithme de la figure 3.

Les différentes opérations commandées par le calculateur 40 sont lues (phase 100). Si la commande est l'exécution d'un tracé, elle est exécutée (phase 101). Il en est de même si la commande est une autre opération que l'avance du matériau (phase 102), par exemple lever ou abaisser l'outil d'écriture.

Si la commande est une avance du matériau, un test est effectué pour vérifier si l'avance précédente est toujours en cours (phase 103). Dans l'affirmative, l'avance en cours est accélérée (phase 104) et la fin de cette avance est détectée (phase 105).

Lorsque l'avance précédente est terminée, l'outil est positionné à l'abscisse DAV (égale à L/2 avant le début de l'avance) en tant que nouvelle origine (phase 106), ce qui revient à déplacer la fenêtre de travail. La position de l'outil est asservie à celle du convoyeur (phase 107) et l'avance du matériau est lancée (phase 108). La fin de l'avance est surveillée (phase 109) et, lorsque la longueur L/2 a été parcourue, l'avance est arrêtée, ainsi que l'asservissement de la position de l'outil à celle du convoyeur (phase 110).

Bien entendu, dans le cas où la direction d'avance du convoyeur n'est parallèle à aucun des deux axes de déplacement de l'outil, l'asservissement de la position de l'outil à celle du convoyeur demande une modification des deux coordonnées de consigne de l'outil.

Dans ce qui précède, on a envisagé le cas d'une fenêtre de travail de longueur égale à la moitié de celle de la zone de travail.

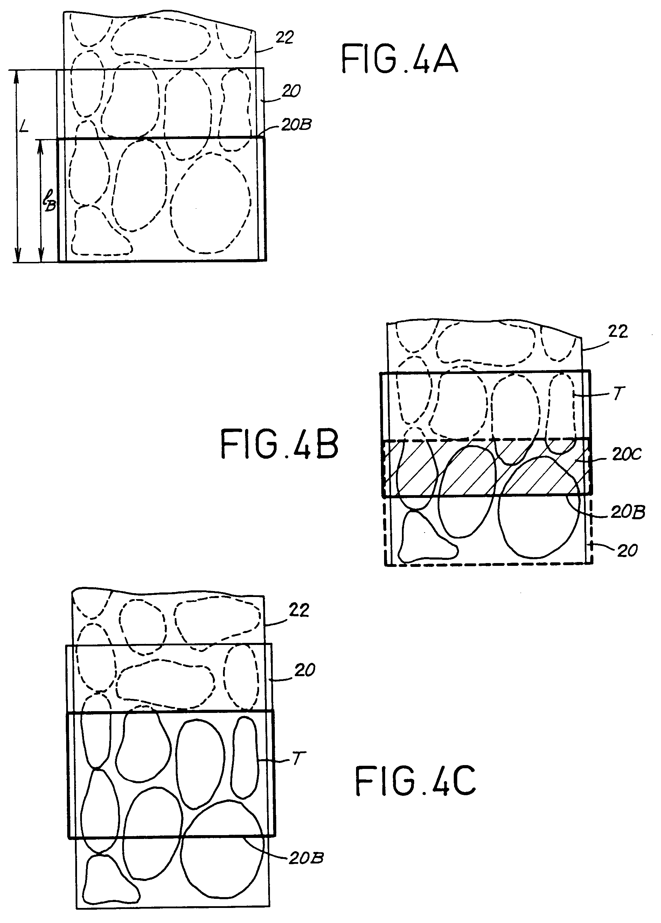

Il est possible, en variante (figure 4A) de choisir une fenêtre de travail 20B dont la longueur $l_B$ est différente de L/2, par exemple supérieure à L/2.

Dans ce cas, chaque avance doit être effectuée sur une longueur au plus égale à $L-l_B$ de sorte que, au début d'une avance (figure 4B), la fenêtre 20B occupe une position qui recouvre en partie sa position précédente (en pointillé sur la figure 4B).

C'est ainsi que, pour éviter des reprises de trajectoires, il est possible, au cours d'une phase du procédé (c'est-à-dire entre deux avances consécutives), de ne pas tracer les parties de trajectoires situées à proximité de la limite amont de la fenêtre, dans la zone de recouvrement 20C, comme, par exemple, c'est le cas pour la trajectoire T. Celle-ci peut alors être tracée de façon ininterrompue lors de la phase suivante (figure 4C).

Le premier mode de réalisation décrit permet effectivement d'effectuer l'avance du matériau 22 en temps masqué, donc de diminuer grandement toute perte de productivité due aux temps d'avance.

Toutefois, lorsqu'une pièce n'est pas entièrement comprise à l'intérieur de la fenêtre, elle ne peut être tracée en une seule fois, sauf cas particulier évoqué dans la variante ci-dessus.

Or, la reprise d'une trajectoire après déplacement du matériau est en pratique difficile à réaliser sans décalage. Ceci peut être toléré pour un traceur mais, dans le cas de découpeurs, l'existence d'un décalage, même très léger, peut être inacceptable car la pièce concernée n'est pas complètement découpée et demande une intervention manuelle.

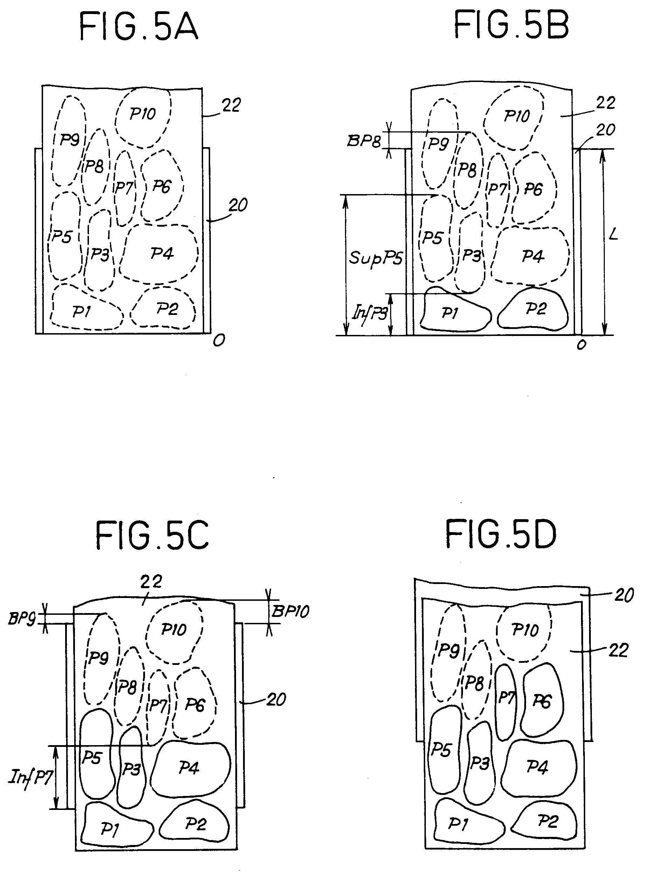

Un autre mode de réalisation du procédé selon l'invention permettant de réaliser une découpe de façon ininterrompue, donc sans présenter cet inconvénient, sera maintenant décrit en référence aux figures 5A à 5D. On supposera que la longueur de la zone de travail est suffisante pour que chaque pièce du placement puisse s'y inscrire ou, si une pièce est plus longue que la zone de travail qu'elle a, au préalable, été divisée en plusieurs pièces qui s'inscrivent chacune dans la zone de travail.

La figure 5A montre, en traits interrompus, les contours des pièces correspondant au placement prédéfini, pour l'extrémité avant du matériau 22 amené dans la zone de travail 20.

Selon ce deuxième mode de réalisation, une découpe d'une pièce n'est effectuée que si elle se trouve entièrement dans la zone de travail après l'avantdernière avance. La dernière avance ne doit alors pas être trop longue pour que cette pièce ne soit pas évacuée de la zone de travail avant d'être découpée.

L'extrémité avant du matériau ayant été amenée à l'extrémité aval de la zone de travail, la ou les pièces dont les extrémités amont sont les plus proches de cette extrémité aval de la zone de travail sont découpées. Dans l'exemple illustré par la figure 5B, il s'agit des pièces P1 et P2.

L'avance du matériau peut alors être commandée sur une longueur inférieure à InfP3, c'est-à-dire la distance séparant, au début de l'avance, l'extrémité aval de la zone de travail de l'extrémité aval la plus proche de l'emplacement d'une pièce non découpée (ici la pièce P3). De préférence, et si cela est possible, l'avance est effectuée sur une distance au moins égale à celle nécessaire pour amener sur la zone de travail les pièces dont les extrémités amont de l'emplacement sur le matériau sont les plus proches de l'extrémité amont de la zone de travail. Dans l'exemple illustré, il s'agit uniquement de la pièce P8 pour laquelle cette distance BP8 est inférieure à $InfP_3$.

Pendant cette avance, et après la fin de celle-ci, les pièces P3, P4, P5, dont les emplacements se trouvaient à l'origine sur la zone de travail, peuvent être découpées (figure 5C). Bien entendu, pendant l'avance, la position de la tête de coupe est asservie à celle du convoyeur, comme décrit plus haut pour le premier mode de réalisation.

Une deuxième avance peut être commandée sur une longueur inférieure à la distance $\text{Inf}P_7$ séparant l'extrémité aval de la zone de travail de l'extrémité aval la plus proche d'un emplacement de pièce non encore découpée (ici la pièce $P_7$). Cette avance est effectuée sur une longueur supérieure aux distances $BP_9$ et $BP_{10}$ qui séparent l'extrémité amont de la zone de travail des extrémités amont les plus proches des emplacements sur le matériau des pièces $P_9$ et $P_{10}$ non encore situées entièrement dans la zone de travail, puisque $\text{Inf}_7$ est plus grande que $BP_9$ et $BP_{10}$.

Pendant cette deuxième avance, et après la fin de celle-ci, la découpe des pièces P6 et P7, dont les emplacements se trouvaient sur la zone de travail après la fin de la première avance, peut être effectuée (figure 5D).

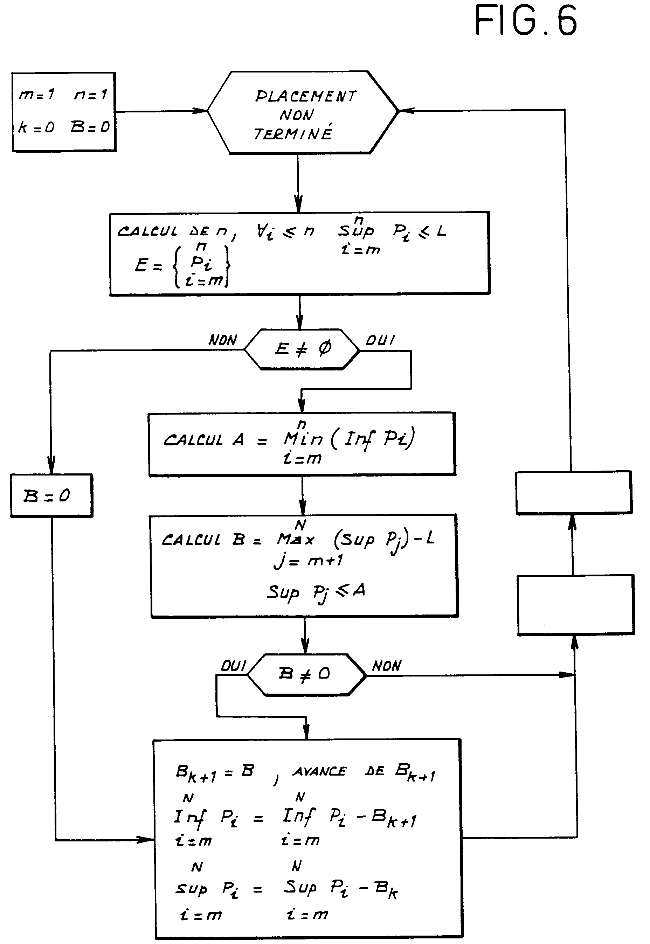

Le processus se poursuit ainsi jusqu'à la découpe complète du placement. Une séquence élémentaire de ce processus est décrite par l'organigramme de la figure 6.

Au départ, des paramètres m, n, k et B sont fixés respectivement aux valeurs m=1, n=1, k=0, B=0 (phase 200) et, tant que la découpe du placement n'est pas terminée (test 201), on détermine l'ensemble E des pièces $P_i$ du placement (i étant un nombre entier supérieur ou égal à 1) qui se trouvent dans la zone de travail (phase 202). Ceci revient à rechercher la valeur de n pour laquelle, quel que soit $i \leq n$,

$$\overset{n}{\underset{i=m}{\text{Sup}}}\, P_i \leq L,$$

où $\text{Sup}\, P_i$ est l'abscisse, mesurée depuis une origine O située à l'extrémité aval de la zone de travail, de l'extrémité amont de la pièce $P_i$ (on suppose que les pièces $P_1$ à $P_{m-1}$ ont déjà été découpées). A titre d'exemple, sur la figure 5B, on a montré l'abscisse $\text{Sup}\, P_5$ pour la pièce $P_5$.

Si l'ensemble E n'est pas vide (test 203), on calcule la distance minimale A qui sépare l'extrémité aval de la zone de travail de l'extrémité aval la plus proche d'une pièce non découpée :

$$A = \overset{n}{\underset{i=m}{\text{Min}}}\, (\text{Inf}\, P_i),$$

où $\text{Inf}\, P_i$ est l'abscisse de l'extrémité aval de la pièce $P_i$ (phase 204). On calcule ensuite la distance maximale B qui sépare l'extrémité amont de la zone de travail d'une extrémité amont d'une pièce non découpée non encore située entièrement dans la zone de travail :

$$B = \overset{N}{\underset{j=n+1}{\text{Max}}}\, (\text{Sup}\, P_j) - L,$$

où $\text{Sup}\, P_j$ est l'abscisse de l'extrémité amont de la pièce $P_j$ et N est le nombre total de pièces à découper (phase 205), avec la condition $\text{Sup}\, P_j - L \leq A$ (pour ne pas que l'avance qui suit fasse sortir une pièce non découpée de la zone de travail). Si la valeur B est nulle (test 206), on découpe la pièce $P_m$, (phase 207), on incrémente la valeur de n d'une unité (phase 208) et on revient au test 201.

Si la valeur B n'est pas nulle (test 206), on commande une phase d'avance d'une longueur $B_{k+1} = B$, k étant le nombre d'avances effectuées (phase 209), et on découpe la pièce $P_n$ en passant à la phase 207. Pendant l'avance, l'abscisse de l'outil est asservie à la position du convoyeur et les valeurs $\text{Inf}\, P_i$ et $\text{Sup}\, P_i$ de toutes les pièces $P_i$ pour lesquelles $m \leq i \leq N$ sont corrigées pour lire

$$\overset{N}{\underset{i=m}{\text{Inf}}}\, P_i = \overset{N}{\underset{i=m}{\text{Inf}}}\, P_i - B_{k+1} \text{ et } \overset{N}{\underset{i=m}{\text{Sup}}}\, P_i = \overset{N}{\underset{i=m}{\text{Sup}}}\, P_i - B_k, \; B_k \text{ et } B_{k+1},$$

étant les longueurs des $k^{\text{ième}}$ et $(k+1)^{\text{ième}}$ avances.

Le procédé de découpe qui vient d'être décrit peut être mis en oeuvre à travers une ou plusieurs nappes superposées de matériau, par exemple plusieurs nappes de tissu formant un matelas. Des machines automatiques permettant de découper des pièces dans de tels matelas sont bien connues.

De ce qui précède, il ressort que le procédé selon l'invention est remarquable en ce qu'il permet de faire travailler l'outil pendant l'avance du matériau, donc d'augmenter la productivité, sans que la commande de la machine dans laquelle le procédé est implanté soit modifiée de façon importante.

En particulier, toutes les fonctionnalités et sécurités des machines existantes, que ce soit des traceurs ou des découpeurs peuvent être conservées, comme, par exemple, le redémarrage automatique après incident.

**Revendications**

1. Procédé pour l'exécution de tracés ou découpes suivant des trajectoires prédéterminées sur un matériau, procédé selon lequel chaque trajectoire est décrite par déplacement d'un outil suivant deux directions dans une zone de travail déterminée le long de laquelle le matériau est avancé de façon intermittente sous l'action d'une commande séparée de celle de l'outil, sans interruption totale du travail de l'outil pendant l'avance du matériau, caractérisé en ce que chaque avance du matériau est effectuée sur une distance inférieure à la longueur de la zone de travail, mesurée dans la direction d'avance du matériau, et l'outil est commandé, pendant une avance du matériau, pour décrire au moins en partie une ou plusieurs trajectoires sur une portion du matériau déjà présente dans la zone de travail avant cette avance et non évacuée de la zone de travail pendant cette avance.

2. Procédé selon la revendication 1, caractérisé en ce que, pendant l'avance du matériau, la position de l'outil est asservie à la position d'un organe d'entraînement du matériau dans son mouvement d'avance.

3. Procédé selon l'une quelconque des revendications 1 et 2, caractérisé en ce qu'on définit une fenêtre de travail ayant une longueur prédéterminée, dans la direction d'avance du matériau, inférieure à la longueur de la zone de travail et, après avoir décrit au moins une partie des trajectoires contenues dans la fenêtre, on décale la fenêtre de travail vers l'amont de la zone de travail dans une position qui couvre au moins chaque trajectoire ou partie de trajectoire non encore décrite située le plus en aval et on commande une avance du matériau en déplaçant simultanément la fenêtre de travail.

4. Procédé selon la revendication 3, caractérisé en ce que la fenêtre de travail (20A) a une longueur égale à la moitié de la longueur de la zone de travail (20).

5. Procédé selon la revendication 3, caractérisé en ce que la fenêtre de travail (20B) a une longueur supérieure à la moitié de celle de la zone de travail et chaque avance du matériau est commandée sur une distance au plus égale à la différence entre la longueur de la zone de travail et la longueur de la fenêtre de travail.

6. Procédé selon l'une quelconque des revendications 1 et 2, caractérisé en ce que chaque avance du matériau est déterminée pour permettre de décrire chaque trajectoire de façon ininterrompue entre le début d'une avance et le début de l'avance suivante.

7. Procédé selon la revendication 6, caractérisé en ce que chaque avance du matériau est effectuée sur une longueur inférieure ou égale à une première valeur égale à la distance séparant l'extrémité aval de la zone de travail et l'extrémité aval la plus proche de l'emplacement d'une trajectoire non encore décrite.

8. Procédé selon la revendication 7, caractérisé en ce qu'une avance du matériau est effectuée sur une longueur supérieure ou égale à une deuxième valeur égale à la plus grande des distances séparant l'extrémité amont de la zone de travail de l'extrémité amont des emplacements de trajectoires non encore comprises entièrement dans la zone de travail, distance pour laquelle ladite deuxième valeur reste inférieure ou égale à ladite première valeur.

9. Utilisation d'un procédé selon l'une quelconque des revendications 1 à 8, pour le tracé de contours de pièces sur un matériau suivant un placement prédéterminé.

10. Utilisation d'un procédé selon l'une quelconque des revendications 1 à 8, pour la découpe de pièces dans un matériau suivant un placement prédéterminé.

**Claims**

1. A method of performing plotting or cutting along predetermined paths on a material, in which method each path is travelled by displacing a tool in two directions within a determined working zone through which the material is advanced intermittently under the action of a control that is separate from the control of the tool, without the work of the tool being totally interrupted while the material is advancing, said method being characterized in that each time the material advances it does so over a distance that is less than the length of the working zone, as measured in the advance direction of the material, and the tool is controlled while the material is advancing so as to travel along at least a portion of one or more paths over a portion of the material that is already within the working zone prior to the advance, and that is not removed from the working zone during the advance.

2. The method according to claim 1, characterized in that, while the material is advancing, the position of the tool is servo-controlled to the position of a drive member causing the material to advance.

3. The method according to any one of claims 1 and 2, characterized in that a working window is defined having a predetermined length in the advance direction of the material, which length is less than the length of the working zone, and, after at least a portion of the paths lying within the window have been travelled, the working window is shifted towards the upstream end of the working zone so as to take up a position in which it covers at least each path or path portion that has not yet been travelled and that is situated further downstream, and the material is caused to advance while the working window is simultaneously displaced.

4. The method according to claim 3, characterized in that the working window (20A) has a length equal to half the length of the working zone (20).

5. The method according to claim 3, characterized in that the working window (20B) has a length that is greater than half the length of the working zone, and each time the material advances, it does so over a distance not more than the difference between the length of the working zone and the length of the working window.

6. The method according to any one of claims 1 and 2, characterized in that each advance of the material is determined so as to enable each path to be travelled without interruption from the start of one advance to the start of the following advance.

7. The method according to claim 6, characterized in that, each time the material advances, it does so over a length not more than a first value that is equal to the distance between the downstream end of the working zone and the closest downstream end of a location for a path that has not yet been travelled.

8. The method according to claim 7, characterized in that, each time the material advances, it does so over a length not less than a second value that is dual to the largest of the distances between the upstream end of the working zone and the upstream ends of the locations for paths that do not yet lie entirely within the working zone, distance for which said second value remains not more than said first value.

9. A use of a method according to any one of claims 1 to 8, for plotting outlines of pieces on a material in a predetermined layout.

10. The use of a method according to any one of claims 1 to 8, for cutting out pieces from a material in a predetermined layout.

## Patentansprüche

1. Verfahren zum Ausführen von Linienzügen oder Schnitten entlang vorbestimmten Wegen auf einem Material, bei dem jeder Weg beschrieben wird durch die Verlagerung eines Werkzeugs in zwei Richtungen im Inneren einer bestimmten Arbeitszone, entlang welcher das Material unter der Einwirkung einer von der Steuerung des Werkzeugs getrennten Steuerung ohne vollständige Unterbrechung der Arbeit des Werkzeugs während des Materialvorschubs intermittierend vorgerückt wird, dadurch gekennzeichnet, daß jeder Materialvorschub mit einem Hub erfolgt, der geringer ist als die Länge der Arbeitszone, gemessen in Vorschubrichtung des Materials und das Werkzeug während eines Materialvorschubs so gesteuert wird, daß es zumindest teilweise einen oder mehrere Wege auf einem Abschnitt des Materials beschreibt, der sich bereits vor diesem Vorschub in der Arbeitszone befunden hat und während dieses Vorschubs die Arbeitszone nicht verläßt.

2. Verfahren nach Anspruch 1, dadurch gekennzeichnet, daß während des Materialvorschubs die Position des Werkzeugs eingeregelt wird auf die Position eines Materialtransportorgans, während das Material vorgerückt wird.

3. Verfahren nach Anspruch 1 oder 2, dadurch gekennzeichnet, daß man ein Arbeitsfenster mit einer vorbestimmten Länge in Vorschubrichtung des Materials, die geringer ist als die Länge der Arbeitszone, definiert, um anschließend nach Beschreiben zumindest eines Teils der in dem Fenster enthaltenen Wege das Arbeitsfenster in stromaufwärtiger Richtung der Arbeitszone in eine Positon zu verlagern, die mindestens einen noch nicht beschriebenen Weg oder einen noch nicht beschriebenen Teil eines Wegs abdeckt, der sich weiter stromabwärts befindet, und ein Materialvorschub angewiesen wird, während gleichzeitig das Arbeitsfenster verlagert wird.

4. Verfahren nach Anspruch 3, dadurch gekennzeichnet, daß das Arbeitsfenster (20A) eine Länge hat, die der Hälfte der Länge der Arbeitszone (20) entspricht.

5. Verfahren nach Anspruch 3, dadurch gekennzeichnet, daß das Arbeitsfenster (20B) eine Länge aufweist, die mehr als die Hälfte der Länge der Arbeitszone beträgt, und jeder Materialvorschub über einen Hub angewiesen wird, der höchstens der Differenz zwischen der Länge der Arbeitszone und der Länge des Arbeitsfensters entspricht.

6. Verfahren nach Anspruch 1 oder 2, dadurch gekennzeichnet, daß jeder Materialvorschub derart festgelegt wird, daß jeder Weg zwischen dem Beginn eines Vorschubs und dem Beginn des nachfolgenden Vorschubs ohne Unterbrechung beschrieben werden kann.

7. Verfahren nach Anspruch 6, dadurch gekennzeichnet, daß jeder Materialvorschub über eine Länge erfolgt, die kleiner oder gleich einem ersten Wert ist, der einer Strecke entspricht, die das stromabwärtige Ende der Arbeitszone und das nächstgelegene stromabwärtige Ende des Verlaufs eines noch nicht beschriebenen Wegs trennt.

8. Verfahren nach Anspruch 7, dadurch gekennzeichnet, daß ein Materialvorschub über eine Länge erfolgt, die größer oder gleich einem zweiten Wert ist, der der größten der Distanzen entspricht, welche das stromaufwärtige Ende der Arbeitszone von dem stromaufwärtigen Ende der Stellen von Wegen trennen, die noch nicht vollständig in der Arbeitszone enthalten sind, soweit für diese Distanz der zweite Wert kleiner oder gleich dem ersten Wert ist.

9. Anwendung des Verfahrens nach einem der Ansprüche 1 bis 8 für den Konturenzug von Stücken auf einem Material entsprechend einem vorbestimmten Muster.

10. Anwendung des Verfahrens nach einem der Ansprüche 1 bis 8 zum Schneiden von Stücken aus einem Material entsprechend einem vorbestimmten Muster.

FIG.1

DONNÉES GRAPHIQUES

$X_R$

$X_C$

40

$Y_R$

$Y_C$

34

$A_C$

$A_R$

46   36

44

32

42

22

$Y$

12

10

20

24

$X$

EP 0 708 700 B1

# FIG.2A

# FIG.2B

# FIG.2C

# FIG.2D

# FIG. 3

```
┌─────────────────┐
│    LECTURE      │
│  COMMANDE À     │——— 100
│   EXECUTER      │
└─────────────────┘
```

AUTRE COMMANDE          TRACÉ

AVANCE LONGUEUR DAV

```
┌─────────────────┐                              ┌─────────────────┐
│   EXÉCUTION     │                              │   EXÉCUTION     │
│    DE LA        │                              │   DU TRACÉ      │——— 101
│   COMMANDE      │                              └─────────────────┘
└─────────────────┘
       102
```

```
           ┌─────────────────┐
           │     AVANCE      │——— 103
    NON   ╱   PRÉCÉDENTE      ╲  OUI
          ╲  EN COURS ?       ╱
           └─────────────────┘
```

```
                          ┌─────────────────┐
                          │   ACCÉLÉRER     │——— 104
                          │   L'AVANCE      │
                          │   EN COURS      │
                          └─────────────────┘

                          ┌─────────────────┐
                          │    ATTENTE      │
                          │   FIN DE        │——— 105
                          │   L'AVANCE      │
                          └─────────────────┘
```

```
┌─────────────────┐
│ POSITIONNER L'OUTIL │
│ À L'ABSCISSE DAV    │——— 106
└─────────────────┘

┌─────────────────┐
│ ASSERVIR L'OUTIL │
│ À LA POSITION    │——— 107
│ DU CONVOYEUR     │
└─────────────────┘

┌─────────────────┐
│    LANCER       │
│   L'AVANCE      │——— 108
└─────────────────┘

┌─────────────────┐
│   ATTENDRE      │
│ FIN DE L'AVANCE │——— 109
└─────────────────┘

┌─────────────────┐
│ ARRÊTER L'AVANCE │
│ ET L'ASSERVISSEMENT │
│ DE L'OUTIL SUR   │——— 110
│ LE CONVOYEUR     │
└─────────────────┘
```

FIG.4A

FIG.4B

FIG.4C

# FIG.5A

# FIG.5B

# FIG.5C

# FIG.5D

# FIG.6

$$m=1 \quad n=1$$
$$k=0 \quad B=0$$

PLACEMENT
NON
TERMINÉ

$$\text{CALCUL DE } n, \quad \forall_i \leq n \quad \overset{n}{\underset{i=m}{Sup}} P_i \leq L$$
$$E = \left\{ \overset{n}{\underset{i=m}{P_i}} \right\}$$

NON — $E \neq \emptyset$ — OUI

$$\text{CALCUL } A = \overset{n}{\underset{i=m}{Min}} (Inf\ P_i)$$

$$B = 0$$

$$\text{CALCUL } B = \overset{N}{\underset{j=m+1}{Max}} (Sup\ P_j) - L$$
$$Sup\ P_j \leq A$$

OUI — $B \neq 0$ — NON

$$B_{k+1} = B \quad, \quad \text{AVANCE DE } B_{k+1}$$
$$\overset{N}{\underset{i=m}{Inf}} P_i = \overset{N}{\underset{i=m}{Inf}} P_i - B_{k+1}$$
$$\overset{N}{\underset{i=m}{Sup}} P_i = \overset{N}{\underset{i=m}{Sup}} P_i - B_k$$